Europäisches Patentamt

European Patent Office

Office européen des brevets

(11) Numéro de publication: **0 216 663**
**A1**

(12) # DEMANDE DE BREVET EUROPEEN

(21) Numéro de dépôt: **86401828.8**

(22) Date de dépôt: **18.08.86**

(51) Int. Cl.⁴: **C 01 B 17/45**
**C 01 G 43/06, B 01 J 19/12**

(30) Priorité: **22.08.85 FR 8512622**

(43) Date de publication de la demande:
**01.04.87 Bulletin 87/14**

(84) Etats contractants désignés: **DE GB IT NL**

(71) Demandeur: **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur: **Cauchetier, Michel**
**111, rue du Vieil Orme**
**F-78120 Rambouillet (FR)**

**Croix, Odette**
**30, rue Auguste Demmler**
**F-92340 Bourg-la-Reine (FR)**

**Folcher, Gérard**
**40, allée de Persepolis**
**F-91400 Orsay (FR)**

**Luce, Michel**
**35 bis, rue André Chenier**
**F-92160 Antony (FR)**

(74) Mandataire: **Mongrédien, André et al**
**c/o BREVATOME 25, rue de Ponthieu**
**F-75008 Paris (FR)**

(54) **Procédé de préparation d'hexafluorure de soufre.**

(57) L'invention a pour objet un procédé de préparation d'hexafluorure de soufre par réaction en phase gazeuse de tétrafluorure de soufre $SF_4$ et d'hexafluorure d'uranium $UF_6$.

Selon l'invention, on ajoute à la phase gazeuse un composé capable d'absorber l'énergie du rayonnement émis par un laser et de transmettre l'énergie ainsi absorbée aux molécules d'hexafluorure d'uranium, et on irradie dans la cellule (31) la phase gazeuse introduite en (37), qui comprend le tétrafluorure de soufre, l'hexafluorure d'uranium et ledit composé, au moyen d'au moins un laser (34) dont le rayonnement présente une longueur d'onde correspondant à un pic d'absorption dudit composé.

De préférence, le composé est l'hexafluorure de soufre et l'on utilise dans ce cas un laser à $CO_2$ ayant une longueur d'onde de 10,6 μm.

FIG. 3

**Description**

Procédé de préparation d'hexafluorure de soufre

La présente invention a pour objet un procédé de préparation d'hexafluorure de soufre.

L'hexafluorure de soufre est un composé très demandé dans l'industrie électronique et électrotechnique à cause de ses propriétés diélectriques. On l'utilise, par exemple, comme atmosphère inerte dans les transformateurs et les autres machines sous haute tension.

L'hexafluorure de soufre a été découvert par H. MOISSAN et S. LEBEAU en 1900 et on le prépare généralement par combustion du soufre dans le fluor gazeux. On peut, toutefois obtenir l'hexafluorure de soufre par d'autres réactions, en particulier à partir du tétrafluorure de soufre par réaction de celui-ci avec de l'hexafluorure d'uranium. Ce mode de préparation de l'hexafluorure de soufre peut être intéressant à exploiter commercialement car l'hexafluorure d'uranium appauvri en $^{235}U$ provenant des installations de séparation isotopique est une source bon marché d'atomes de fluor. De plus, lors de cette réaction, l'hexafluorure d'uranium est transformé en fluorure d'uranium solide, ce qui facilite le stockage des rejets provenant de ces installations de séparation isotopique.

Cependant, comme il est indiqué par C.E. JOHNSON, J. FISCHER et M.J. STEINDLER dans J. Am. Chem. Soc., vol 83, p. 1620 (1961), cette réaction de $UF_6$ avec $SF_4$ ne peut être obtenue qu'en chauffant le mélange au-delà de 500°C pour avoir une vitesse de réaction appréciable, et l'emploi de températures aussi élevées pose certains problèmes. En effet, outre l'énergie à fournir, l'hexafluorure d'uranium est très corrosif et de ce fait très difficile à manipuler à 500°C.

On peut, toutefois surmonter cet inconvénient et utiliser des températures plus basses, par exemple de l'ordre de 300 C, à condition d'activer par la lumière les molécules d'hexafluorure d'uranium en faisant appel à des sources de lumière qui peuvent être absorbées par l'hexafluorure d'uranium, soit des sources dans le domaine de longueur d'onde de 5 à 6 µm. Ceci peut être effectué en utilisant un laser à CO, comme il est décrit dans le brevet anglais GB-A-1 496 125. Malheureusement, cette technique est difficile à exploiter à l'échelle industrielle car, dans ce domaine de longueurs d'onde, on ne dispose pas de lasers puissants et pratiques à mettre en oeuvre.

La présente invention a précisément pour objet un procédé de préparation d'hexafluorure de soufre par réaction du tétrafluorure de soufre avec l'hexafluorure d'uranium, qui pallie les inconvénients des procédés précités.

Le procédé, selon l'invention, de préparation d'hexafluorure de soufre par réaction en phase gazeuse du tétrafluorure de soufre $SF_4$ avec l'hexafluorure d'uranium $UF_6$, se caractérise en ce que l'on ajoute à la phase gazeuse un composé capable d'absorber l'énergie du rayonnement émis par un laser et de transmettre l'énergie ainsi absorbée aux molécules d'hexafluorure d'uranium, et en ce que l'on irradie la phase gazeuse comprenant le tétrafluorure de soufre, l'hexafluorure d'uranium et ledit composé au moyen d'au moins un laser dont le rayonnement présente une longueur d'onde correspondant à un pic d'absorption dudit composé.

Les composés susceptibles d'être utilisés peuvent être $BCl_3$, $SiF_4$, $SF_6$ et tout autre composé qui présente de fortes sections efficaces d'absorption dans le domaine d'émission du laser $CO_2$ et dont les énergies de dissociation sont plus grandes que celles de $UF_6$.

De préférence, ledit composé est l'hexafluorure de soufre qui peut être excité vibrationnellement par un laser à $CO_2$ ayant une longueur d'onde de 10,6 µm. En effet, à cette longueur d'onde qui correspond à un maximum d'absorption infrarouge de $SF_6$, la molécule d'hexafluorure de soufre est excitée vibrationnellement et elle peut transmettre son énergie aux molécules d'$UF_6$ qui sont alors dissociées par photosensibilisation comme cela est décrit par C. ANGELIE, M. CAUCHETIER et J. PARIS dans Chem. Phys., vol. 66, p. 129 (1982).

Dans le procédé de l'invention, l'utilisation de $SF_6$ pour activer les molécules d'hexafluorure d'uranium est de plus intéressante puisque $SF_6$ est l'un des produits formés lors de la réaction ; on peut ainsi autocatalyser la réaction entre $SF_4$ et $UF_6$.

Un autre avantage provenant de l'utilisation de $SF_6$ réside dans la possibilité d'utiliser des lasers à $CO_2$ de grande puissance qui émettent au maximum de gain, c'est-à-dire à 10,6 µm et constituent de plus des sources économiques, de haut rendement, capables de fournir des puissances très élevées, ce qui permet de réaliser ainsi la réaction dans des conditions optimales.

Lors de la réaction entre l'hexafluorure d'uranium et le tétrafluorure de soufre, il se forme de l'hexafluorure de soufre et un fluorure d'uranium inférieur solide. La nature du fluorure d'uranium solide obtenu dépend en particulier des conditions de température et de pression utilisées pour la réaction. Cette température doit de toute façon être inférieure à la température de décomposition de $SF_6$, soit à 800°C. Généralement, on réalise l'irradiation à une température allant de la température ambiante à la température de dissociation de $UF_6$ qui est de l'ordre de 600°C, sous une pression de 235 à 162000 Pa.

En se reportant au diagramme d'Agron donné à la page 52 du nouveau traité de Chimie Minérale - Pascal - tome XV. fascicule 2, on peut déterminer quelles sont les pressions d'hexafluorure d'uranium à utiliser pour obtenir le ou les fluorures d'uranium désirés. En effet, les réactions susceptibles de se produire sont les suivantes :

$$UF_6 + SF_4 \xrightarrow{SF_6^*} SF_6 + UF_4 \quad (1)$$

$$2UF_6 + SF_4 \xrightarrow{SF_6^*} SF_6 + 2UF_5 \quad (2)$$

$$4UF_6 + 3SF_4 \xrightarrow{SF_6^*} 3SF_6 + 2U_2F_9 \quad (3)$$

$$8UF_6 + 7SF_4 \xrightarrow{SF_6^*} 7SF_6 + 2U_4F_{17} \quad (4)$$

Dans ces réactions $SF_6^*$ représente les molécules de $SF_6$ introduites au départ de la réaction, à l'état excité par irradiation au moyen du laser.

Pour la préparation d'hexafluorure de soufre, le meilleur rendement par rapport aux atomes de fluor de $UF_6$ est obtenu quand le produit solide de la réaction est le tétrafluorure d'uranium, ce qui correspond au schéma réactionnel (1).

Aussi, selon l'invention, on utilise de préférence des pressions partielles en hexafluorure d'uranium de la phase gazeuse de 135 à 13500 Pa qui est la tension de vapeur saturante de $UF_6$ à 25°C quand on travaille à la température ambiante. Si l'on veut utiliser une pression partielle de $UF_6$ supérieure à 100 Torr (13500 Pa) il sera nécessaire de chauffer l'ensemble du dispositif expérimental relatif à $UF_6$ : ainsi, par exemple, une température de 57°C est nécessaire pour avoir une pression de 1 atmosphère ($10^5$ Pa) en $UF_6$. Les valeurs des tensions de vapeur de $UF_6$ se trouvent dans le nouveau traité de Chimie Minérale, Pascal, tome XV, fascicule 2, p.86 et suivantes.

Par ailleurs, on choisit les quantités d'hexafluorure d'uranium, d'hexafluorure de soufre et de té trafluorure de soufre présentes dans la phase gazeuse soumise à l'irradiation au moyen du laser, en vue d'obtenir une vitesse de réaction appropriée.

Généralement, les pressions partielles des différents constituants de la phase gazeuse se situent dans les gammes suivantes : 135 à 13500 Pa pour l'hexafluorure d'uranium, 50 à 135000 Pa pour l'hexafluorure de soufre et 50 à 13500 Pa pour le tétrafluorure de soufre en travaillant à température ambiante.

Par ailleurs, lorsque l'on veut obtenir la réaction (1), on utilise de préférence des quantités équimolaires d'hexafluorure d'uranium et de tétrafluorure de soufre. Toutefois, il peut être préférable dans certains cas de travailler avec un excès de $SF_4$ par rapport à $UF_6$ pour que ce dernier soit entièrement dissocié, ou de travailler avec un excès de $UF_6$ par rapport à $SF_4$ pour accélérer la réaction par formation d'un excès d'atomes de fluor.

L'hexafluorure de soufre introduit dans la phase gazeuse est de préférence présent lui aussi en quantité équimolaire par rapport à $UF_6$ : Toutefois, on peut utiliser un excès ou un défaut de $SF_6$ par rapport à $UF_6$. Un excès de $SF_6$ peut accélérer la réaction, mais ceci n'est généralement pas souhaitable car $SF_6$ risque d'être dissocié par une température réactionnelle trop élevée.

Selon l'invention, la phase gazeuse soumise à l'irradiation peut aussi comprendre un gaz inerte tel que l'azote ou l'argon.

Pour mettre en oeuvre le procédé de l'invention, on peut utiliser un laser pulsé ou un laser continu.

Selon un mode préféré de mise en oeuvre du procédé de l'invention, on réalise la préparation de l'hexafluorure de soufre en continu. Dans ce cas, on met en circulation dans une cellule le mélange gazeux comprenant ledit composé, du tétrafluorure de soufre et de l'hexafluorure d'uranium, on soumet le mélange gazeux circulant dans la cellule à l'action dudit faisceau laser, et on sépare du mélange gazeux sortant de la cellule les produits solides formés lors de la réaction. Ceci peut être effectué par des dispositifs classiques, par exemple des membranes circulaires ou cylindriques en polytétrafluoroéthylène poreux ou en nickel poreux, ou par un cyclone.

Dans ce mode de mise en oeuvre du procédé, on peut également mettre en circulation dans la cellule un gaz inerte, éventuellement préchauffé, afin d'éviter les dépôts de fluorure solides sur les parois de la cellule. Ce gaz inerte entraîne également à l'extérieur de la cellule les produits gazeux et les produits solides provenant de la réaction.

Dans ce mode de mise en oeuvre du procédé, les débits d'hexafluorure de soufre, de tétrafluorure de soufre et d'hexafluorure d'uranium introduits dans la cellule sont généralement dans le rapport 1/1/1, mais ces proportions peuvent varier. En effet, il peut être préférable de travailler avec un excès de tétrafluorure de soufre par rapport à l'hexafluorure d'uranium pour que ce dernier soit entièrement dissocié ou bien il peut être préférable de travailler avec un excès d'hexafluorure d'uranium par rapport au tétrafluorure de soufre pour accélérer la réaction par formation d'un excès d'atomes de fluor. Un excès d'hexafluorure de soufre par rapport aux deux autres réactifs ($UF_6$ et $SF_4$) peut accélérer la réaction, mais il est préférable de travailler avec un défaut de $SF_6$ pour que celui-ci ne soit pas dissocié par une température réactionnelle trop élevée.

Dans une cellule de ce type, on peut utiliser un laser continu ou un laser pulsé. Dans ce dernier cas, on introduit de préférence le mélange gazeux dans la cellule par une conduite munie d'une vanne dont la

3

fréquence et la durée d'ouverture correspondent de façon synchrone à la fréquence et à la durée des impulsions du laser. On peut aussi, dans ce dernier cas, associer un laser continu au laser pulsé.

D'autres caractéristiques et avantages de l'invention apparaîtront mieux à la lecture de la description qui suit, donnée bien entendu à titre illustratif et non limitatif, en référence au dessin annexé sur lequel :

- la figure 1 est une représentation schématique d'un dispositif de mise en oeuvre du procédé de l'invention utilisant un laser pulsé,

- la figure 2 est un diagramme représentant la pression partielle de $UF_6$ dans le dispositif de la figure 1, en fonction du temps d'irradiation par le faisceau laser, et

- la figure 3 représente de façon schématique un autre dispositif de mise en oeuvre en continu du procédé de l'invention.

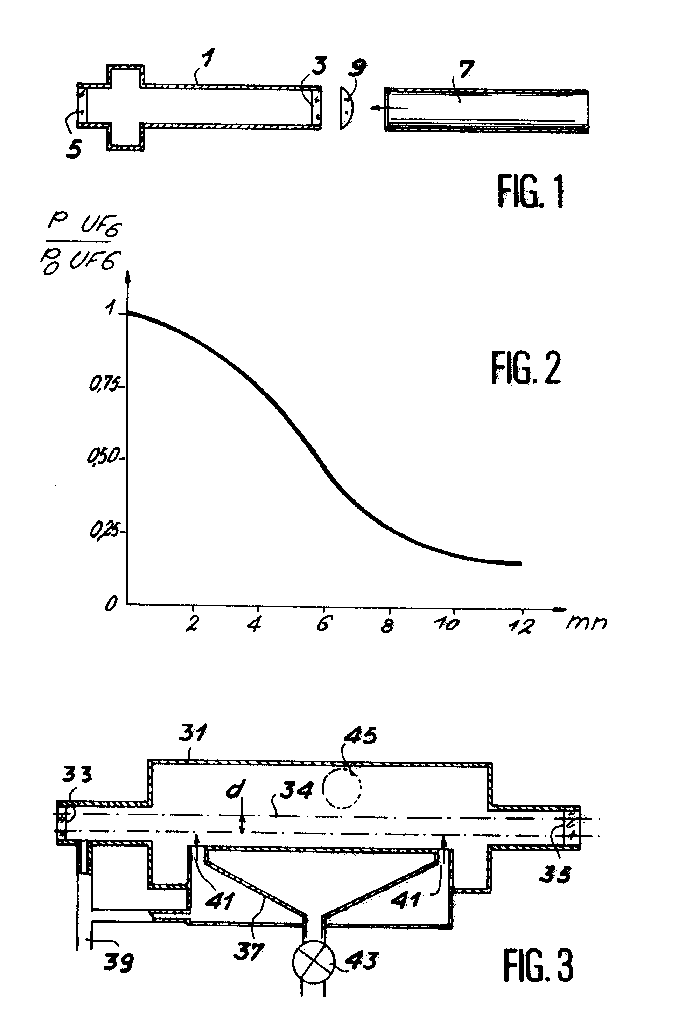

Sur la figure 1, on voit que le dispositif comprend une cellule cylindrique 1 ayant un volume de 330 $cm^3$ et une longueur de 30 cm. Cette cellule est obturée, d'une part, à son extrémité supérieure par une fenêtre 3 transparente d'entrée d'un faisceau laser et, d'autre part, à son extrémité inférieure par une fenêtre 5 de sortie du faisceau laser ou par un miroir 5 de réflexion du faisceau laser.

Dans ce dispositif, on utilise un laser pulsé 7 à $CO_2$ TEA : Transversal Excitation Atmosphéric (dans le laser à $CO_2$ TEA, les gaz sont transversalement excités par une décharge électrique à la pression atmosphérique) qui délivre des impulsions ayant une durée de 100 ns, une longueur d'onde de 10,6 µm et une énergie de 1 J à la cadence de 10 impulsions par seconde. Ces impulsions peuvent être focalisées au milieu de la cellule par une lentille convergente 9 en germanium ayant une distance focale de 19 cm. Dans ce dispositif, la composition du mélange gazeux présent dans la cellule 1 peut être vérifié par spectrophotométrie infrarouge.

Les exemples 1 à 3 qui suivent, illustrent l'utilisation d'un tel dispositif pour préparer du $SF_6$.

EXEMPLE 1

On introduit dans la cellule 1 un mélange gazeux de $SF_6$, $SF_4$ et $UF_6$ ayant une pression partielle de 5,5 Torr (742,5 Pa) en $SF_6$, une pression partielle de 11 Torr (1485 Pa) en $SF_4$ et une pression partielle de 22 Torr (2970 Pa) en $UF_6$.

Par action du laser $CO_2$ TEA, on dissocie l'hexafluorure d'uranium at l'on forme ainsi de l'hexafluorure de soufre. L'analyse des constituants du mélange gazeux présent dans la cellule par spectrophotométrie infrarouge indique que le rapport $SF_6$ formé sur $UF_6$ dissocié est de 0,51. On a donc dans ces conditions la réaction (2) suivante :

$$SF_4 + 2UF_6 \xrightarrow{SF_6^*} SF_6 + 2UF_5 \quad (2)$$

EXEMPLE 2

Dans la cellule 1 représentée sur la figure 1, on introduit un mélange gazeux de $SF_6$, $SF_4$ et de $UF_6$ ayant la composition suivante :
- pression partielle de $SF_6$ = 0,41 torr (55,35 Pa),
- pression partielle de $SF_4$ = 0,53 Torr (71,55 Pa),
- pression partielle de $UF_6$ = 1,08 Torr (145,80 Pa).

On soumet ce mélange à l'action du faisceau laser émis par le laser $CO_2$ TEA et on détermine la pression partielle de $UF_6$ dans le cellule 1 en fonction de la durée d'irradiation.

Les résultats obtenus sont donnés sur la figure 2 qui représente le rapport de la pression partielle de $UF_6$ à l'instant t ($PUF_6$) sur la pression partielle initiale de $UF_6$ à l'instant t=0 ($P_0 UF_6$) en fonction de la durée d'irradiation (en min.).

En fin d'opération, on examine le mélange gazeux par spectrométrie infrarouge at l'on constate que celui-ci contient aussi du décafluorure de soufre $S_2F_{10}$. On obtient donc dans ces conditions la réaction (2) décrite précédemment qui conduit à la formation de $SF_6$, mais aussi la réaction (5) suivante :

$$2SF_4 + 2UF_6 \xrightarrow{SF_6^*} S_2F_{10} + 2UF_5 \quad (5)$$

$S_2F_{10}$ est dissocié ensuite par irradiation au laser $CO_2$, selon la réaction (6) :
$$S_2F_{10} \rightarrow SF_6 + SF_4 \quad (6)$$
On détermine également les quantités de $SF_4$ et de $UF_6$ qui ont disparu, et l'on trouve que leur rapport est de 0.6. ce qui indique que la réaction entre $SF_4$ et $UF_6$ suit globalement la réaction (2) pour 80% et la réaction (5) pour 20%.

## EXEMPLE 3

Dans cet exemple, on utilise le dispositif représenté sur la figure 1, mais avec un laser 7 constitué par un laser continu à $CO_2$ ayant une puissance de 15 W et émettant à une longueur d'onde de 10,6 µm. On introduit dans la cellule 1 un mélange gazeux de $SF_6$, $SF_4$ et $UF_6$ dans les proportions 1/1/1 sous une pression totale de 30 Torr (4050 Pa).

Dans ces conditions, le rapport entre les quantités de $SF_6$ formé et de $UF_6$ dissocié est de 0,52, ce qui indique que l'on a la réaction (2) décrite précédemment.

En se reportant maintenant à la figure 3, qui illustre un dispositif pour préparer en continu de l'hexafluorure de soufre par le procédé de l'invention, on voit que le dispositif comprend une cellule tubulaire 31 fermée à l'une de ses extrémités par une fenêtre transparente d'entrée 33 d'un faisceau laser 34 de diamètre d et à son autre extrémité par un miroir métallique 35 réalisé par exemple en cuivre ou en métal doré, refroidi à l'eau, plan ou concave, qui permet de réfléchir dans la cellule la partie du faisceau laser qui n'a pas été absorbée lors de son passage dans la cellule. Le mélange gazeux peut être introduit en continu dans la cellule 31 perpendiculairement au faisceau laser 34 par un conduit 37 qui débouche dans la cellule par une partie évasée à embouchure rectangulaire, la largeur de l'embouchure étant au plus égale au diamètre du faisceau laser pour que tout le mélange gazeux soit irradié. On peut aussi introduire dans la cellule 31 un gaz vecteur, d'une part, par le conduit 39 au niveau de la fenêtre d'entrée du faisceau laser 34 pour éviter le dépôt de produits solides sur cette fenêtre et, d'autre part, autour du mélange gazeux sortant de la conduite 37 par un conduit 41 concentrique à la conduite 37. Après avoir été irradié dans la cellule 31, le mélange gazeux qui contient en suspension des produits solides en poudre formés lors de la réaction, est extrait de la cellule 31 par une conduite 45. Dans une cellule de ce type, on peut utiliser un laser $CO_2$ continu ou un laser $CO_2$ pulsé. Par ailleurs, le gaz inerte introduit par les conduits 39 et 41 peut être préchauffé afin d'éviter les dépôts de fluorures solides sur la fenêtre d'entrée 33. La conduite 45 est, par ailleurs, reliée à un dispositif approprié tel qu'une membrane circulaire ou cylindrique en polytétrafluoroéthylène poreux ou en nickel poreux, ou un cyclone, permettant de séparer du mélange gazeux les produits solides en poudre obtenus lors de la réaction.

L'exemple 4, ci-dessous, illustre l'utilisation de ce dispositif pour préparer en continu de l'hexafluorure de soufre.

## EXEMPLE 4

Dans ce cas, on utilise un laser $CO_2$ continu ayant une puissance de 150 W, et émettant à une longueur d'onde de 10,6 µm avec un diamètre de faisceau de 5 mm. Le faisceau du laser peut être focalisé au moyen d'une lentille convergente circulaire ou cylindrique. On introduit dans la cellule 31 un mélange gazeux de $SF_6$, $SF_4$ et $UF_6$ par la conduite 37 dans des proportions correspondant à 1/1/1, en utilisant les débits suivants (mesurés dans les conditions normales de température et de pression) : 40 $cm^3$/min pour $SF_6$, 40 $cm^3$/min pour $SF_4$ et 40 $cm^3$/min pour $UF_6$. On introduit également de l'argon par les conduits 39 et 41 à un débit global de 400 $cm^3$/min (mesuré également dans les conditions normales de température et de pression). On opère à la température ambiante avec une pression totale dans la cellule de 100 Torr (13 500 Pa). Après irradiation, le rapport des quantités de $SF_6$ formées et de $UF_6$ dissociées est de 1, ce qui indique que l'on a dans ces conditions la réaction (1) suivante :

$$UF_6 + SF_4 \xrightarrow{SF_6^*} SF_6 + UF_4$$

Les débits et la pression utilisés dans cet exemple, ainsi que la puissance du laser ne sont bien entendu donnés qu'à titre indicatif. On peut en effet les faire varier, par exemple dans des proportions allant de $10^{-1}$ à $10^2$ fois les valeurs indiquées.

De même, on peut utiliser un laser pulsé au lieu d'un laser continu, mais dans ce cas il est préférable d'introduire le mélange gazeux par l'intermédiaire d'une vanne 43 placée sur la conduite 37, dont la fréquence et la durée d'ouverture correspondent de façon synchrone à la fréquence et à la durée d'impulsion du laser.

## Revendications

1. Procédé de préparation d'hexafluorure de soufre par réaction en phase gazeuse de tétrafluorure de soufre $SF_4$ et d'hexafluorure d'uranium $UF_6$, caractérisé en ce que l'on ajoute à la phase gazeuse un composé capable d'absorber l'énergie du rayonnement émis par un laser et de transmettre l'énergie ainsi absorbée aux molécules d'hexafluorure d'uranium, et en ce que l'on irradie la phase gazeuse comprenant le tétrafluorure de soufre, l'hexafluorure d'uranium et ledit composé au moyen d'au moins un laser dont le rayonnement présente une longueur d'onde correspondant à un pic d'absorption dudit composé.

2. Procédé selon la revendication 1, caractérisé en ce que ledit composé est l'hexafluorure de soufre.

3. Procédé selon la revendication 2, caractérisé en ce que le laser est un laser à $CO_2$ ayant une

longueur d'onde de 10,6 μm.

4. Procédé selon l'une quelconque des revendications 1 à 3, caractérisé en ce que la pression partielle en $UF_6$ du mélange gazeux est de 135 à 13500 Pa.

5. Procédé selon l'une quelconque des revendications 2 à 4. caractérisé en ce que les pressions partielles des différents constituants de la phase gazeuse se situent dans les gammes suivantes :

- 135 à 13500 Pa pour l'hexafluorure d'uranium,
- 50 à 135000 Pa pour l'hexafluorure de soufre, et
- 50 à 13500 Pa pour le tétrafluorure de soufre.

6. Procédé selon l'une quelconque des revendications 1 à 5. caractérisé en ce que l'on réalise l'irradiation à une température allant de la température ambiante à la température de dissociation de $UF_6$. sous une pression de 235 à 162000 Pa.

7. Procédé selon l'une quelconque des revendications 1 à 6. de préparation en continu d'hexafluorure de soufre. caractérisé en ce que l'on met en circulation dans une cellule (31) le mélange gazeux comprenant ledit composé. du tétrafluorure de soufre et de l'hexafluorure d'uranium, on soumet le mélange gazeux circulant dans la cellule à l'action dudit faisceau laser (34) et on sépare du mélange gazeux sortant (en 45) de la cellule les produits solides formés lors de la réaction.

8. Procédé selon la revendication 7. caractérisé en ce que l'on met également en circulation dans la cellule un gaz inerte.

9. Procédé selon l'une quelconque des revendications 7 et 8, caractérisé en ce que l'on utilise un laser pulsé et en ce que l'on introduit le mélange gazeux dans la cellule (31) par une conduite (37) munie d'une vanne (43) dont la fréquence et la durée d'ouverture correspondent de façon synchrone à la fréquence et à la durée des impulsions du laser.

10. Procédé selon la revendication 9. caractérisé en ce que l'on utilise simultanément un laser pulsé et un laser continu.

86461828 8

FIG. 1

FIG. 2

FIG. 3

### Office européen des brevets

## RAPPORT DE RECHERCHE EUROPEENNE

Numero de la demande

EP 86 40 1828

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| D,A | GB-A-1 496 125 (KRAFTWERK UNION AG) <br> * Page 2, lignes 105-119 * | 1 | C 01 B 17/00 <br> C 01 G 43/00 <br> B 01 J 19/00 |
| | --- | | |
| A | CHEMICAL ABSTRACTS, vol. 96, no. 22, 31 mai 1982, page 661, résumé no. 190549p, Columbus, Ohio, US; C. ANGELIE et al.: "Sensitized dissociation of uranium hexafluoride, xenon oxide fluoride, (XeOF4) and sulfur fluoride chloride (SF5Cl) by sulfur hexafluoride excited with a pulsed carbon dioxide laser", & J. CHEM. PHYS. 1982, 66(1-2), 129-40 (Cat. D,A) <br> * Résumé * | | |
| | --- | | DOMAINES TECHNIQUES RECHERCHES (Int Cl 4) |
| A | CHEMICAL ABSTRACTS, vol. 102, no. 14, 8 avril 1985, page 628, résumé no. 122970m, Columbus, Ohio, US; H. HOU et al.: "Infrared laser-sensitized dissociation of uranium hexafluoride in the presence of carbon monoxide", & HUAXUE XUEBAO 1985, 43(1), 24-9 <br> * Résumé * | | C 01 B <br> C 01 G <br> B 01 J |
| | ----- | | |

Le présent rapport de recherche a été établi pour toutes les revendications

| Lieu de la recherche | Date d'achèvement de la recherche | Examinateur |
|---|---|---|
| LA HAYE | 24-11-1986 | SCHUT,R.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82